# EUROPEAN PATENT SPECIFICATION

(11) **EP 1 500 527 B1**
(45) Date of publication and mention of the grant of the patent: **16.04.2008**
(21) Application number: 04103415.8
(22) Date of filing: 16.07.2004
(51) Int. Cl.: B60C 11/02, B60C 25/00

(54) **Improved method of changing tread on very large tires**
Verbessertes Verfahren zum wechseln der Lauffläche eines sehr breiten Reifens
Méthode améliorée de changement de bande de roulement sur pneumatiques très larges

(30) Priority: 23.07.2003 US 625346
(43) Date of publication of application: 26.01.2005
(73) Proprietor: THE GOODYEAR TIRE & RUBBER COMPANY, Akron, OH 44316-0001 (US)
(72) Inventor: LOCKRIDGE, James Francis, Battle Mountain, NV 89820 (US); PEARSON, Richard David, Franklin Lakes, NJ 07417 (US); LAMMLEIN, Robert Albert, Jr, Cuyahoga Falls, OH 44221 (US); RODGERS, Shawn Christopher, Strongsville, OH 44136 (US); REX, William Allen, Doylestown, OH 44230 (US); YOVICHIN, Albert James, Doylestown, OH 44230 (US)
(74) Representative: Kutsch, Bernd

(56) References cited:
- US-A- 1 707 014
- US-A- 2 609 026
- US-A- 3 815 651
- US-A- 3 927 778
- US-A- 3 970 493
- US-B1- 6 435 805

## Description

### Field of the Invention

This invention relates to a method for changing large pneumatic tires typically used on large vehicles such as earthmoving vehicles and, more particularly, to a method enabled by the use of a removable tread belt pneumatic tire construction, according to claim 1. It also relates to a tire building and tread belt manipulator mechanism according to claim 5.

### Background of the Invention

In US-A- 6,526,659, a method of changing large tires is disclosed. In that patent it is noted that tread belt pneumatic tires which are subject to the method of the present invention are very large tires, which means tire with a greater than 3.05 m (119.9 inches) outside diameter (OD), as generally designed for use on very large vehicles, generally off-the-road vehicles such as earthmovers and large capacity mining trucks (e.g., 300 short tons or more). The size of these tires is extremely large. For an example, the tire weight can be approximately 3,628 kg (8,000 pounds) to 6,803 kg (15,000 pounds) or more for an unmounted tire. When using a two-piece type tire wherein the tread belt forms the outer structure and the inner structure is formed by a carcass wherein the two parts are separable, the tread belt alone will weigh over 1, 814 kg (4,000 pounds) typically, many times more depending on the size. By way of example, a 1.45 m (57 inch) nominal rim diameter two-piece tire having a 45R57 size will have a tread belt assembly having an outside diameter of approximately 3.66 m (12 foot) or roughly 144 inches and will weigh approximately a little more than 2041 kg (4,500 pounds), a smaller but still very large 1.30 m (51 inch) nominal rim diameter tire of a 3300R51 size yields a 1,361 kg (3000 Ib) tread belt, and the massive 1.60 m (63 inch) 59R63 tire has a tread belt weighing in at 3821 kg (8424 Ibs). In order to change a worn tread belt assembly on a preexisting carcass or even to apply one onto the carcass, it has been determined that it is more efficient to change the tread belt assembly while the carcass is mounted on the rim and attached to the vehicle.

In US 6,526,659, it is disclosed that the tire can be deflated and the old or worn tread belt can be pulled off the deflated carcass and then the new tread belt assembly can be driven onto by the deflated carcass and pushed onto the tire by spinning the wheel. Effectively, it suggested that the partially deflated carcass could drive out of the old tread belt and be driven into the replacement tread belt, respectively, in order to accomplish the tread belt changeover. In practice, while this invention seems to provide a rather simplified method of assembly, it has been determined to be much more difficult when put into practice. Such a method runs the risk of having the large tread belt assembly fall which could cause catastrophic injury to the personnel trying to accomplish the tread belt changeover and the movement of the vehicle on the deflated carcass is considered to be somewhat risky and unacceptable.

What was considered important in this prior art method of tread belt changeover is that by not removing the rim assembly and carcass from the vehicle significant amount of time can be saved when replacing a tread belt assembly. A second consideration of the prior art invention was that while it worked for the outside axle wheels it is basically impractical for the interior wheel on a dual axle in that there is no way that the tread belt can be positioned over both carcasses. Accordingly, assuming you have a dual wheel position axle as is typically the case in these large earthmover tires, an improved method was required in order to access the interior axle wheel and to accomplish a tread belt changeover.

An object of the present invention is to accomplish a replacement of a tread belt assembly onto a carcass mounted on a vehicle rim already mounted to the vehicle. It is a further object of the present invention to accomplish a removal of a worn tread belt while mounted to a carcass mounted onto a vehicle and to achieve this removal of the tread belt whether on an inside axle position or an outboard axle position on a dual wheel assembly.

US-A- 3,970,493 discloses a replaceable tread on a tube tire carcass which can be changed in the field. For this purpose, a partial vacuum within the tire carcass sufficient to cause it to commence collapsing is created.

US-A- 1,707,014 discloses a carcass with a tread mounted on that carcass wherein the tread is removable by deflating the carcass.

### Summary of the Invention

A method of forming a two-piece tire assembly by mounting a very large tread belt onto a tire carcass when the carcass is mounted on a rim which is also mounted on a vehicle according to claim 1 is disclosed. The method includes the step of jacking the vehicle wheel position up to that the wheel clears the ground.

In a preferred embodiment, the method includes the step of deflating the carcass and removing the existing tread belt assembly from the carcass prior to installing the new tread belt. In yet a preferred embodiment, this method includes inserting a pair of support arms in the tread grooves of the tread belt to engage the radially outer surface of the tread belt. After the support arms are engaged, the operator pulls the tread belt using the support arms to remove the tread belt from the deflated and vacuumed carcass. Preferably, the support arms are tilted angularly to lift the tread belt as it is pulled from the carcass.

The radially inner surface of the tread belt and the radially outer surface of the carcass may include interlocking circumferentially continuous ribs and grooves. The preferred method may further have the step of aligning these interlocking grooves and ribs prior to inflating the carcass. The preferred method of mounting the new tread belt assembly preferably includes the step of using the support arms inserted a distance not more than the full width of the tread belt preferably substantially less than the full width of the tread belt and then moving the tread belt over the carcass past the support arms. This enables the tread belt to be placed on the upper half of the carcass without having the support arms impacting the carcass. Preferably, the steps of holding includes the step of tilting the support arms and tread belt such that as the tread belt approaches the carcass, it is brought to the carcass on an angle. As the support arms push the tread belt onto the carcass, the weight of the tread belt will move the lower position of the tread belt at least partially over the carcass as a function of gravity. The preferred method further includes the step of lifting or optionally pushing the tread belt using the support arms to position the tread belt over the carcass. The manipulating support arms preferably are capable of angular rotation such that the support arms can locally lift or push the tread belt onto the carcass in any circumferential direction.

Generally, the rims of these large tires include a removable rim flange and sealing means. It is preferred that the step of mounting a two-piece tire assembly further includes the step of clamping the separate rim flange to the rim prior to pulling a vacuum. This ensures that the beads and rim flange remain fully seated and a seal can be effected. Otherwise, the rim flange may move preventing a vacuum to be pulled on the carcass.

### Definitions

"Bead" means that part of the tire comprising an annular tensile member wrapped by the ply cords and shaped, with or without other reinforcement elements such as flippers, chippers, apexes, toe guards and chafers, to fit the design rim.

"Carcass" means a radial or bias tire structure absent the tread and belt structure.

"Circumferential" means lines or directions extending along the perimeter of the surface of the annular tread perpendicular to the axial direction.

"Equatorial plane (EP)" means the plane perpendicular to the tire's axis of rotation and passing through the center of its tread.

"Lateral" and "laterally" mean lines or directions that are parallel to the axis of rotation of the tire (also "axial).

"Radial" and "radially" mean directions extending radially toward or away from the axis of rotation of the tire.

### Brief Description of the Drawings

Reference will be made in detail to the preferred embodiments of the invention, examples of which are illustrated in the accompanying drawing figures.

Certain elements in selected views of the drawings may be illustrated for clarity. Cross-sectional views, if any presented herein, may be in the form of slices or near-sided cross-sectional views omitting certain background lines which would otherwise be visible in a true cross-sectional view, for illustrative clarity.
Figure 1 is a cross-sectional view illustrating half of a portion of a removable tread belt tire, according to the invention.
Figure 2 is a cross sectional view of the rim for the two-piece tire illustrating a flange clamp that is preferably employed in one embodiment of the invention.
Figure 3A through Figure 3E are views of a manipulator used to carry the large tread belt and tire carcass.
Figures 4A and 4B are views of the two-piece tire mounted onto a vehicle.
Figures 5A, 5B and 5C are views of the manipulator being used to pull a worn tread belt assembly from the carcass while mounted to vehicle of Figures 4A and 4B.
Figures 6A through 6C illustrate the new tread belt assembly being installed onto the carcass while mounted onto the vehicle.

### Detailed Description of the Invention

The method of this invention requires a tread belt version of a large tire (such as tires used on earthmover-type very large vehicles). Such a tire has an outside diameter of more than approximately 304,55 cm (119.9 inches). The method is not dependent on a particular design for the removable tread belt and matching carcass. Although a specific very large tire design is described hereinbelow for illustrating the embodiment of this inventive method, the inventive method should not be limited to this particular tire design except for a two piece tire with removable tread belts generally.

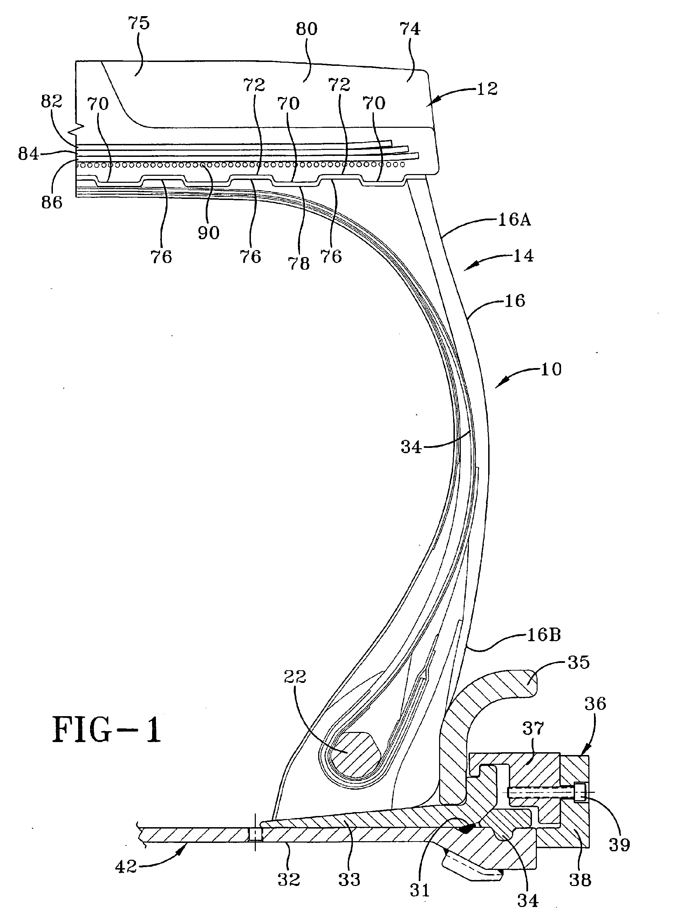

FIG. 1 illustrates a cross-section of a portion of a very large tread belt pneumatic tire 10 which in the specific embodiment illustrated is a size 70/68R63 earthmover tire. The size 59R63 tire has a 411.45 cm (182 inch) maximum inflated outside diameter (OD), a 177.80 cm (70.0 inch) maximum inflated width in the axial direction, and a nominal bead diameter of 160.02 cm (63 inches). The tread belt 12 has a thickness (t) of approximately 254 cm (10 inches), and a width of approximately 165.1 cm (65 inches). The assembled tire 10 weighs 7,256 kg (16,000 pounds), of which approximately 3,628 kg (8,000 pounds) are in the removable tread belt 12. The tire carcass 14 is typically inflated to a pressure of about 686 kPa (100 pounds per square inch) with air and sometimes with an air/nitrogen mixture. The very large tread belt pneumatic tire 10 includes a ground engaging, circumferentially extending tread belt 12 mounted on a radially reinforced, beaded tire carcass 14. The beaded tire carcass 14 generally includes a pair of tire sidewalls 16 extending radially inwardly from the outer circumferential surface 20 of the tire carcass 14 and terminating at a pair of bead wires 22. The sidewalls 16 each have an upper portion 16a in the shoulder region of tire carcass 14 and radially outward of the maximum section width of the tire carcass 14, and a lower portion 16b, adjacent the bead wires 22, and radially inward of the maximum section width of the tire carcass 14.

Most details of the tire carcass 14 construction are not relevant to the method of this invention, and will not be described other than to note that the carcass 14 generally contains at least one rubberized laminated ply layer 34 of tire cord fabric. The carcass 14 mounts on the wheel mounting rim 42, pneumatically sealing in the area of the bead 22 against, and held in place by, the flange 35, which is generally removable from the rim 42 on wheels used for very large tires 10.

An optional feature is generally included in removable tread belt tires 10 in order to assist in holding the removable tread belt 12 in place on the carcass 14. This optional feature, illustrated in FIG. 1, comprises a set of one or more grooves 78 and one or more ribs 76 formed in the outer circumferential surface 20 of the carcass 14.

The ground engaging, circumferentially extending tread belt 12 is removably mounted onto the tire carcass 14. At a minimum, the tire tread belt 12 comprises a tread portion 80, and at least one belt 82, 84, 86, and a layer of zero-degree wires 90 which encircle the tire tread and are provided to restrict the radially outward growth of the tread belt 12. The placement and shape of the wires 90 and/or the belts 82-86 are the subject of other patents, and are not critical to the method of this invention.

An optional feature of the tread belt 12 illustrated in FIG. 1 includes one or more annular ribs 72 and one or more annular grooves 74 in the underside or inner circumferential surface 70 of the tread belt 12 that interlock with corresponding grooves 78 and ribs 76 of the tire carcass 14 to restrain the tread belt 12 from lateral or axial movement with respect to the carcass 14.

Until the recent advent of increasingly larger "very large" pneumatic tires, there was very little perceived need for removable tread belt versions of these tires. The present invention has identified a new category of problems related to the very large tires, and provides methods of changing very large tires which utilize removable tread belt tire designs to address the handling and changing problems which are unique to these tires.

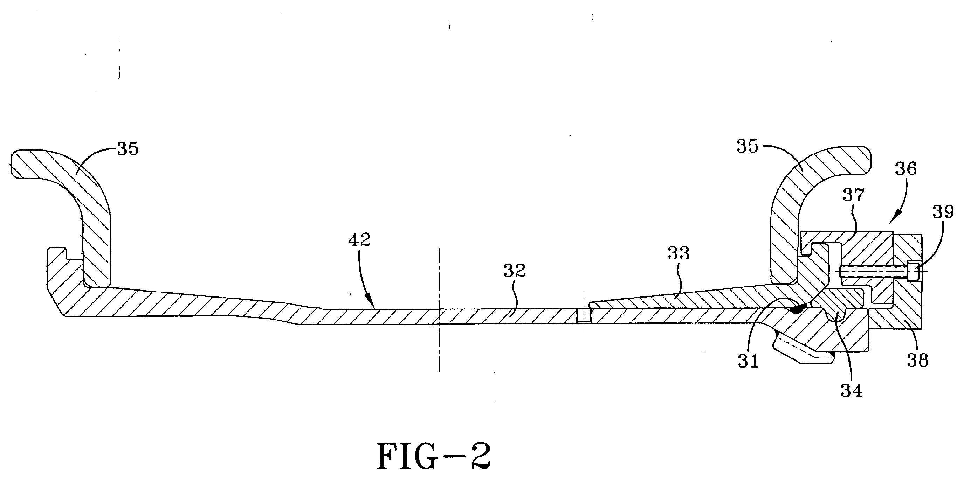

With reference to Figure 2, a cross-sectional view of the rim 42 for the two piece tire or large earthmover tires generally has a pair of rim flanges 35 and a cylindrical rim base 32. At least one rim flange 35 is removable and has a locking ring 34 as illustrated. In order to pull a vacuum on the carcass 514, it is essential that the removable rim bead seat band 33 remain in its sealed position over the O-ring 31 as illustrated in the cross-sectional view. To accomplish this, when practicing this invention, it is preferred that a rim clamping means 36 be used or any other means to secure the rim flange 35 and the bead seat band 33 so that it cannot move while vacuum is being pulled. Absent such a flange clamping means 36 the rim flange 35 and bead seat band 33 can move laterally inwardly creating an opening such that a vacuum cannot be maintained on the tire carcass 14, 514. The clamp 36 as illustrated locks the rim flange 35 and bead seat band 33 in position during this procedure. It is believed that the clamp can simply be left on the rim 42 throughout the tire's operation. Accordingly, it does not need to be removed unless the carcass 14, 514 itself has to be replaced.

As shown, the flange clamping means 36 preferably is four pieces 37, 38. Preferably three block portions 37 interlock with the bead seat band 33 and abuts against a portion of a secondary clamp ring portion 38 as shown. The secondary clamp ring portion 38 is used that presses against the first clamp block portion 37 and the rim cylindrical base 32. As illustrated, a threaded fastener 39 is inserted through the secondary clamping ring 38 and threaded into each of the blocks 37 which pulls the bead seat band 33 firmly against the bead locking ring 34. When this is accomplished, the entire assembly remains in the locked position as illustrated. The locking ring 34 holding the bead seat band 33, the flange 35 and the rim base 32 together is shown between the bead seat band 33 and the clamping blocks 37 and clamping ring 38 as illustrated. This simple clamping mechanism can be placed in approximately two to three locations around the rim flange 35 and this plurality of flange clamping means 36 will ensure that the rim flange 35 will not move.

### Method of Changing Very Large Tires

Utilizing very large removable tread belt tires 10 for the very large vehicles at a work site, according to the method of this invention, makes the process of changing tires significantly more cost effective. When conventional very large tires are used, a first tire on a wheel must be removed from the very large vehicle, the first tire must then be removed from the wheel and replaced with a second tire, and then the second tire on the wheel must be replaced on the very large vehicle 600. This tire changing process typically requires as much as 5 to 6 hours for a single tire change.

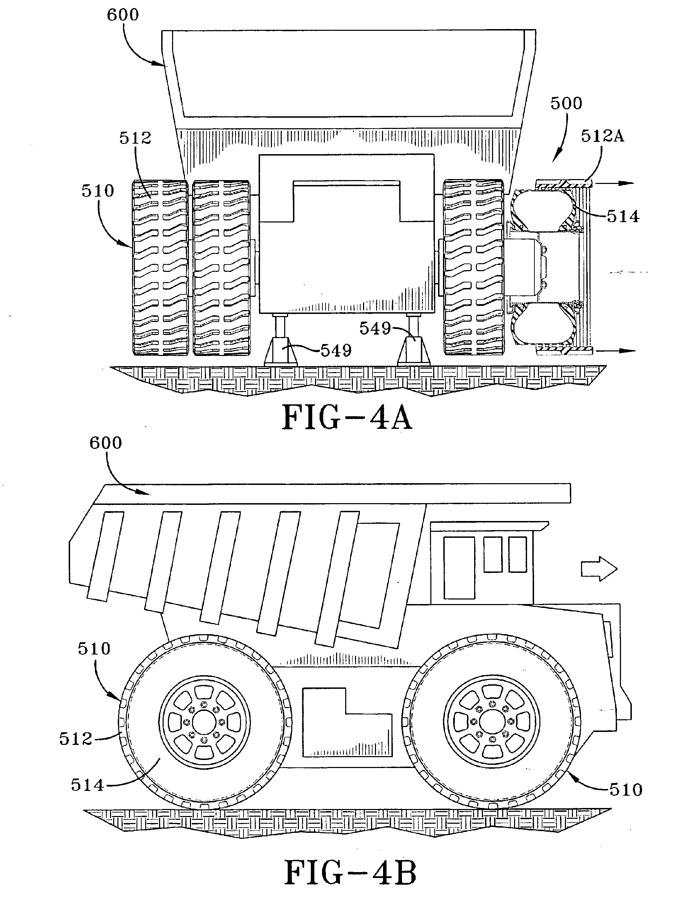

FIG. 4A illustrates an embodiment 500 of an improved tire-changing process according to this invention which utilizes removable tread belt tires 10, 510 and requires approximately 1 hour for a tread belt change. The time (and cost) savings of this method 500 assumes that only the tread belt requires changing, as is usually the case, particularly for well-designed very large tread belt tires 10, 510 which include tread belt 12, 512 design features which protect the carcass from puncture and cuts, and carcass 14, 514 design features which enhance the durability of the carcass under extreme loading and flexure conditions. If the carcass has been damaged or worn out, then a time-consuming conventional tire changing method will be required to change the carcass 14. For well-designed very large removable tread belt tires 10, it is estimated that at least 3 out of 4 tire changes will only require a change of the tread belt 512. Testing of the present inventive method shows that the carcass 514 after being driven over a period of time has the beads tightly formed to the rim such that a vacuum can be preformed on the carcass 512 to facilitate removal of the tread belt.

In the embodiment 500 of the very large tire changing method of this invention, the tire 510 having a first tread belt 512a which is to be changed must be positioned so that the first tread belt 512a is removed from contact with a load bearing surface such as the ground. In this example, an appropriate portion 525 of the very large vehicle 600 is raised on a jack 549 (e.g., a pneumatic jack). Next, the tire carcass 514 holding the first tread belt 512a to be changed is deflated by removing the air or air/nitrogen and a vacuum is pulled until the first tread belt 512a becomes loose about the tire carcass 514. Next, the first tread belt 512a is laterally removed from the tire carcass 514 using the device described below.

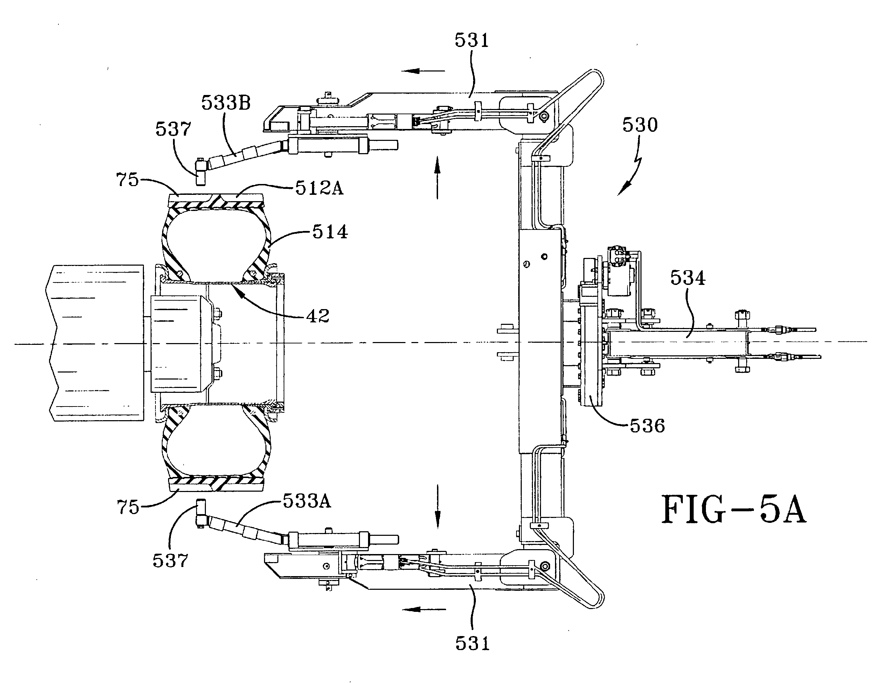

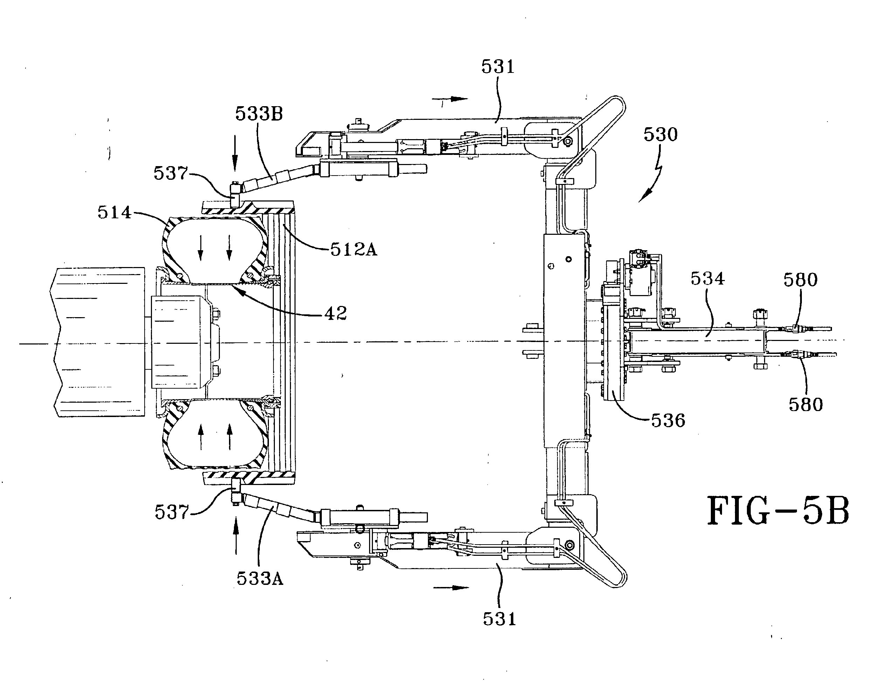

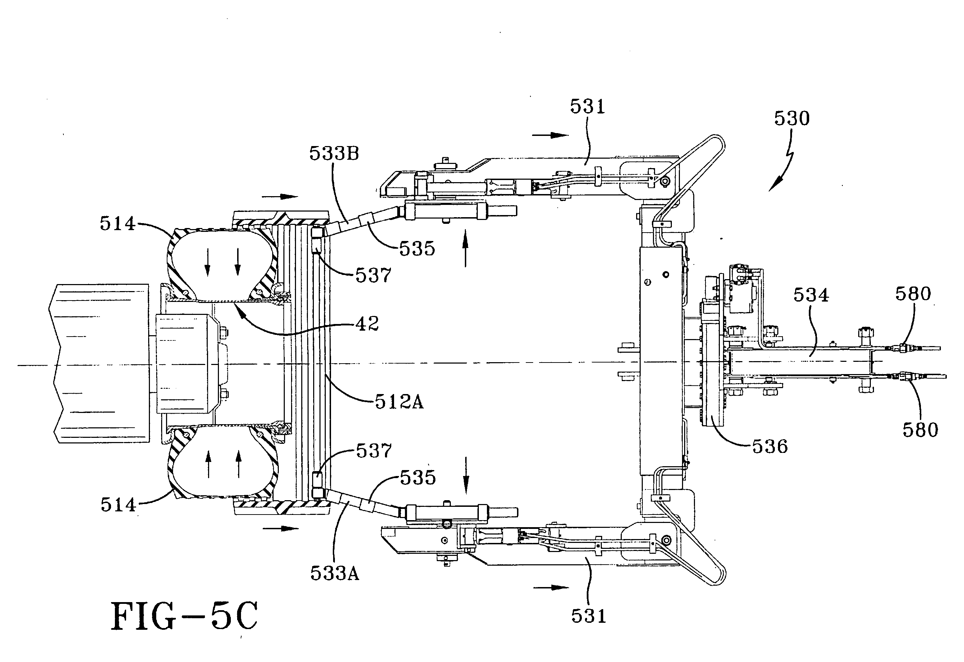

As illustrated in FIG. 5A, a pair of support arms 533 (533a, 533b) with end blocks 537 are inserted into the tread grooves 75, the first tread belt 512a and then lateral force is applied by, for example, hand or lift truck (neither shown). The preferred method would be to pull one portion of the first tread belt 512a off first (e.g., the upper portion farthest the ground), and then to pull or peel off the remaining portions of the first tread belt 512a using the support arms 533. The support arms533 are preferably tilted to create an upperward lift as the tread belt is pulled off the carcass. As shown in Fig. 5B the tread belt 512a is preferably pulled at least halfway off the carcass 514 using the end blocks 537. Then the manipulator support arms 533 are moved to a location inward of the overhanging tread belt 512a and continues to lift and pull the tread belt 512a from the carcass 514 as illustrated in Fig. 5C. The arrows internal the carcass 514 show the carcass 514 is partially deflated, preferably under a vacuum as shown to reduce the diameter of the carcass 514.

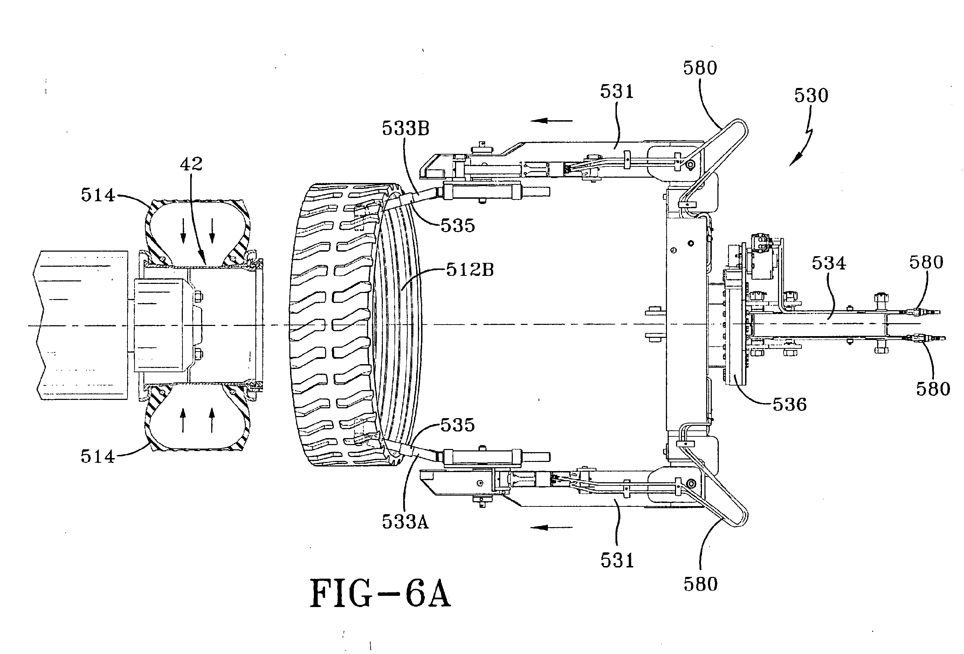

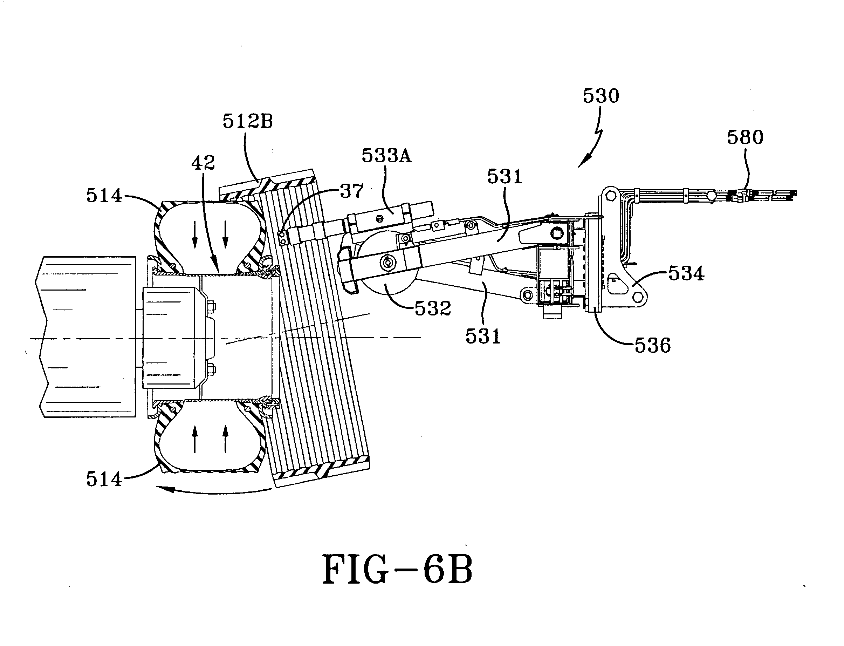

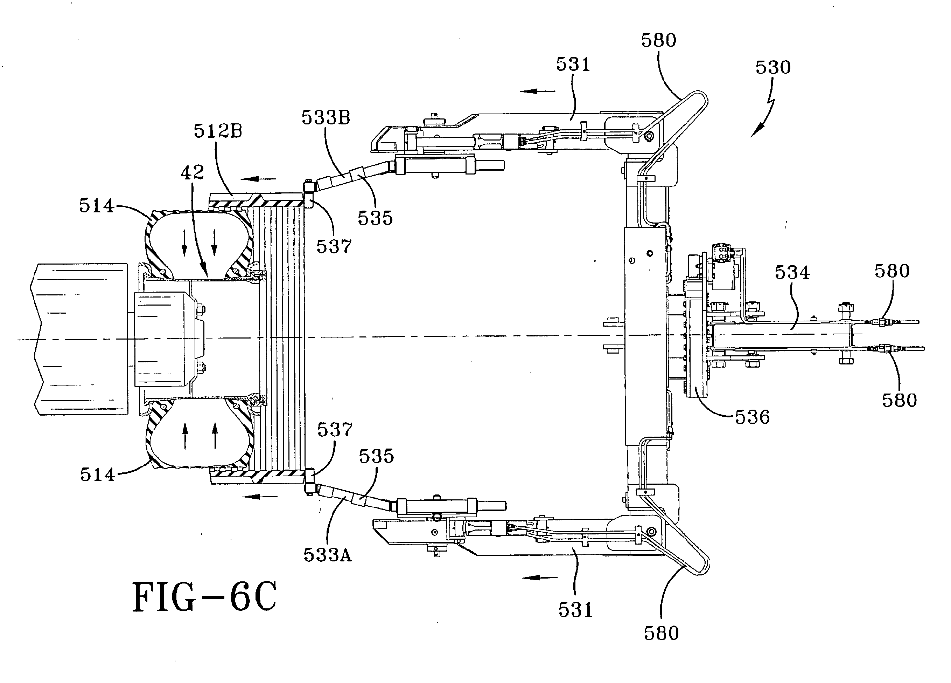

The replacement second tread belt 512b can now be laterally moved onto the tire carcass 514 as shown in Figures 6A, 6B and 6C. This is preferably accomplished using a lift truck (not shown) having a manipulator 530 with support arms 533 inserted halfway into the tread belt to raise the top portion of the second tread belt 512b to the level of the top of the carcass 514 and immediately adjacent to the carcass 514. Using suitable tools, including, for example, attachments to the lift truck (not shown) such as the manipulator 530 with support arms 533a, 533b, the top portion of the second tread belt 512b is laterally moved halfway onto the top of the carcass 514 while tilted off vertical. As the top portion of the second tread belt 512b is laterally moved onto the carcass 514 thereby supporting some of the weight, the remainder of the second tread belt 512b can be pushed using the end blocks 537 and support arms 533a, 533b to follow the lateral movement of the top portion of the second tread belt 512b until the entire circumference of the second tread belt 512b can be correctly positioned circumferentially around the outer circumferential surface 20 of the tire carcass 514 a distance about one-half way laterally over the carcass. Preferably the support arms 533 can be retracted from between the carcass 514 and tread belt 512b at some point and the front end blocks 537 of the arms used to lift or push the tread belt 512b onto the carcass 514. Then as shown in Fig. 6C the support arms 533 with end blocks 537 can be used to lift or push the tread belt 512b further onto the carcass 519. As noted the support arms 533 can be manipulated to tilt angularly and also can be rotated to lift or push at any circumferential location. Such correct positioning includes aligning the center planes or the laterally outside edges of the second tread belt 512b with the lateral outside edges of the upper portions 16a of the sidewalls 16 of the carcass 514; and may also includes aligning and interlocking any grooves 74, 78 and any corresponding ribs 72, 76 (if present) in the interlocking circumferential surfaces 70, 20 of the second tread belt 512b and the tire carcass 514.

Finally, the tire carcass 514 is preferably inflated to its proper inflation pressure, and is inflated at least enough to cause the second tread belt 512b inner circumferential surface 70 to conform closely to the outer circumferential surface 20 of the tire carcass 514. The very large tire change is complete, and the very large vehicle 600 can be placed back in service by lowering it to the ground 537, such as by lowering and removing the pneumatic jack 549.

Due to the relative ease of the inventive methods of storing and changing tread belts 12 for very large tires 10, this invention makes it feasible to change tread belts 512 to utilize different tread designs to accommodate different operating conditions such as different load-bearing surface conditions (e.g., as caused by changes in environmental conditions: wet/dry, summer/winter, mud/snow/dry), or such as different applications of the very large vehicles 525 (e.g., usage on gravel, dirt, sand, rough terrain or paved roadway, high speed driving, low speed driving).

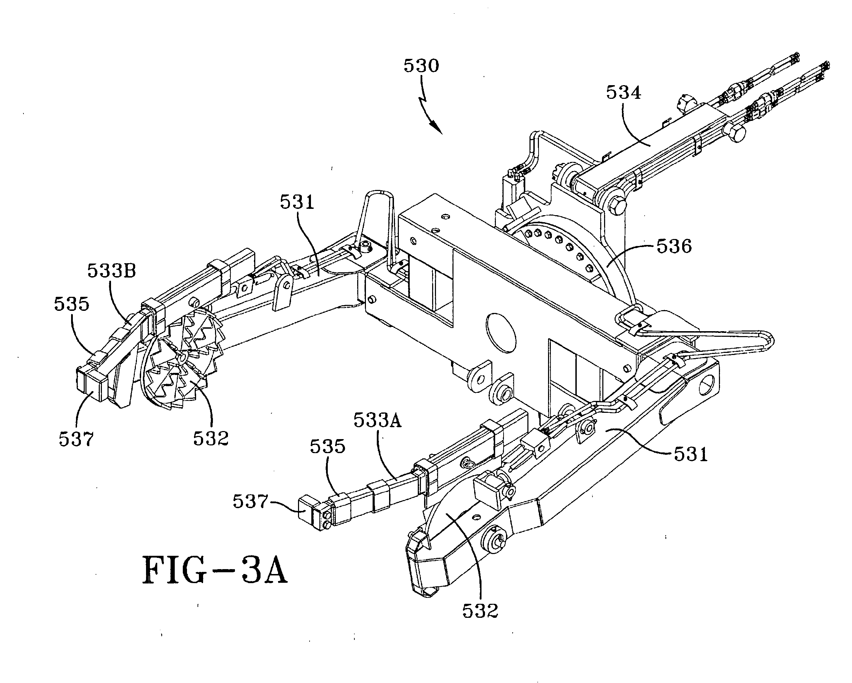

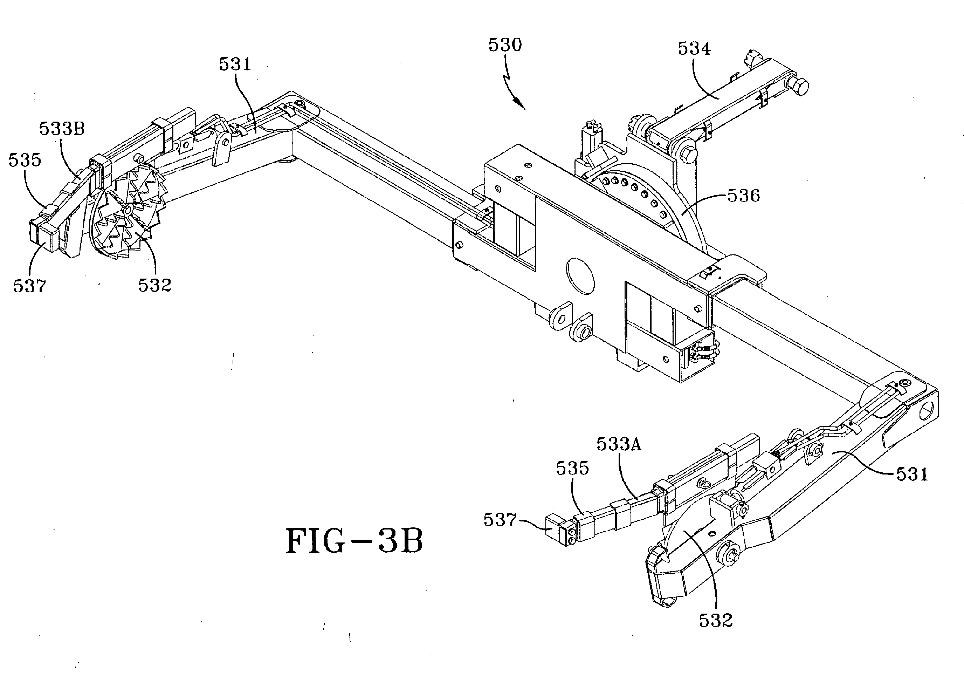

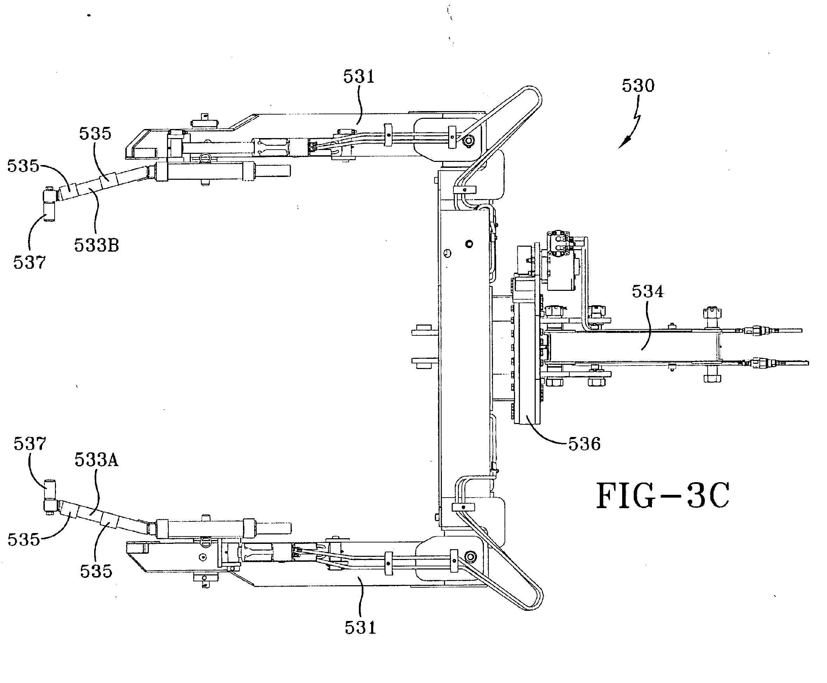

With reference to Figures 3A through 3E, a tire handling and tread belt manipulator 530 is illustrated. In Figure 3A a perspective view shows that the manipulator 530 has a mechanism 524 to facilitate attachment to a forklift or other vehicle. The manipulator 530 has a pair of spaced manipulator arms 531 for tire handling and has tire grippers 532 as illustrated at each end of the manipulating arm 531. Directly above the tire handlers are manipulating arms 531, a pair of support arms 533 (533a, 533b). These support arms 533 are specifically designed for use on a two piece tire assembly 10. As illustrated the support arms 533 have one or more telescoping slidable extension sections that can be extended outwardly to increase the amount of extension. Preferably each support arm 533a, 533b is canted inwardly or angularly inwardly extending. This facilitates insertion into a tread belt assembly 512b. Once inserted, the manipulator support arm 531 can be elevated to hold the tread belt assembly 512b. As illustrated the manipulator arms 533 preferably have a series of protruding rods or blocks 535 spaced on the manipulator support arms. These protruding rods 535 facilitate lifting, pushing and pulling the tread belt assemblies 512a, 512b from the carcass 514 as they fit nicely into the grooves 74 of the tread belt 512a, 512b. Additionally rectangular end blocks 535 are provided to facilitate the pushing and pulling of the tread belts 512a, 512b. Optionally, the surfaces of the manipulator arms may be painted or coated with a non-slip material to increase the grip on the tread belt as it is removed.

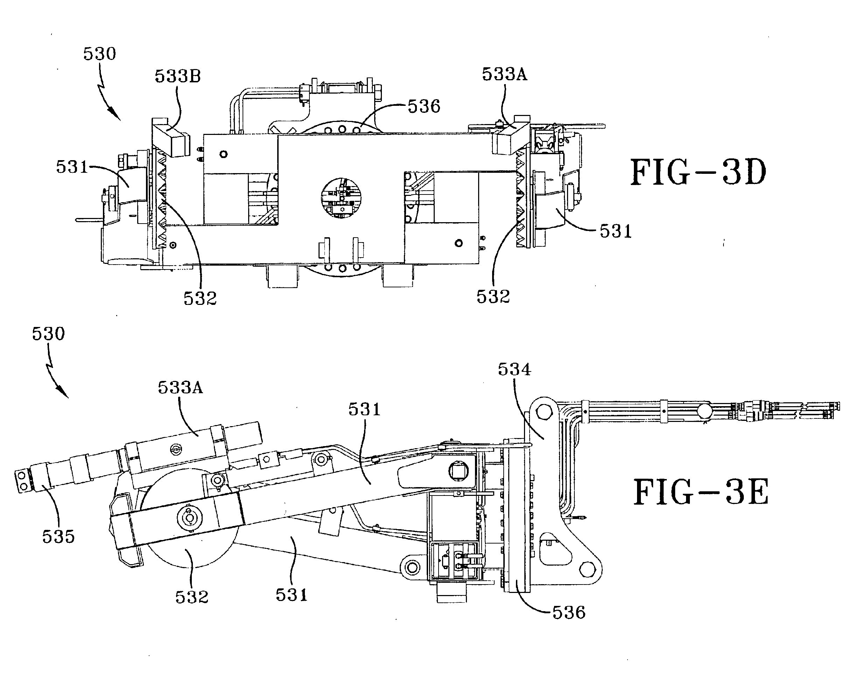

As further illustrated, the manipulator mechanism 530 is mounted on an angular rotating plate 536 such that the operator can rotate the entire manipulator 530 approximately 180°+ in either direction. This is important, as discussed, once the tread belt 512b is placed onto the carcass 514, the manipulator 530 can be used to lift or push the tread belt 512b onto the carcass 514 or, alternatively, it can be rotated to assist in pulling a tread belt 512a off of a carcass and can maneuvered while inserted between the tread belt 512a and the carcass 514 or simply in the grooves of the tread or it can be maneuvered when simply lifting or pushing a tread belt 512b onto a carcass 514. As illustrated in Figure 3D, the manipulator assembly 530 is designed to be attached to a forklift and as such can be tilted as illustrated in Figure 3E. The arms 533 can be independently tilted or can be tilted in unison.

As shown, the manipulator arms 531 have a significantly large amount of reach length and space and can therefore traverse across and actually over an outer two piece tire assembly and can reach inward to the inward mounted two piece tire assembly in a dual wheel position. In such a case by removing the first tread belt assembly 512a from the first tire carcass 514 using the procedure as previously outlined it is possible to then remove the internal or inboard mounted tread belt assembly 512a from the carcass 514 by reaching over the first carcass 514 and inserting the support arms between the tread belt 512a and the inner carcass 514 or into the grooves on the tread's outer surface after a vacuum has been pulled and removing the tread belt 512a off the inboard carcass 514 and actually pulling it over the outboard carcass 514. In this way, tread belt assemblies 512a can be removed from both wheel positions. Furthermore, the entire process can be repeated wherein the new replacement tread belt assembly 512b is actually positioned over the first carcass 514, passing over the first carcass 514 and can reach to insert the tread belt 512 onto the inboard tread carcass 514. Absent these manipulator support arms 533a, 533b, it is not fully possible to simply pull a worn tread belt 512a or place a new tread belt 512b over a pair of carcasses due to the fact that the weight must be secured. The fact that the manipulator support arms 533 can be used to maneuver across both tire carcass assemblies 514 by spanning and reaching over and pulling the worn tread belts permits removal and replacement of both wheel positions in a dual wheel assembly. Such tread belt to carcass assembly technique is feasible using the present invention.

The manipulation of the mechanism 530 is controlled using the hydraulic controls of the lift truck not illustrated. Hydraulic fluid lines 580 are shown which directly transmit commands for motion to the various support arms 533 to change angles and orientation.

## Claims

1. A method of forming a two-piece tire assembly by mounting a large tread belt (12, 512b) onto a tire carcass (14, 514) when the tire carcass (14, 514) is mounted on a rim (42) on a vehicle (600); the method comprising the steps of:
jacking the vehicle wheel position up;
pulling a vacuum partially collapsing the carcass (14, 514);
inserting a pair of support arms (533a, 533b) between tread and deflated carcass (14, 514) to engage the radially inner surface of the large tread belt (12, 512b);
placing a vertical upper radially inner portion of the tread belt (12, 512b) onto a top surface of the carcass (14, 514) about one-half way or more across the axial width of the carcass (14, 514) thereby supporting the tread belt weight;
lifting or pushing the rest of the tread belt (12, 512b) axially over the carcass (14, 514) a predetermined distance;
inflating the carcass (14, 514) to a predetermined pressure to form the two piece tire assembly while mounted on the vehicle (600).

2. The method of claim 1 wherein the radially inner surface of the tread belt (12, 512b) and the radial outer surface of the carcass (14, 514) have interlocking circumferentially continuous ribs and grooves and the method further comprises the steps of aligning the grooves and ribs prior to inflating the carcass (14, 514).

3. The method of claim 1 or 2, further comprising the steps of:
holding or restraining the tread belt (12, 512b) using the pair of support arms (533a, 533b) inserted not the full width of the belt; and
moving the tread belt (12, 512b) laterally over the carcass (14, 514) past the support arms (533a, 533b).

4. The method of at least one of the previous claims, wherein the step of holding includes the step of tilting the tread belt (12, 512b) on the support arms (533a, 533b) whereby the weight of the tread belt moves the lower portion at least partially over the carcass.

5. A tire handling and tread belt manipulator mechanism comprising a pair of movable manipulator arms (531); a pair of tire grippers (532) attached to the ends of the manipulator arms (531); a pair of tread belt support arms (533), one being attached above the tire grippers (532) on each manipulator arm (531); and a hydraulic means to move the manipulator arms (531).

6. The tire handling and tread belt manipulator mechanism of claim 5, further comprising a pair of tread belt end blocks, one end block being attached to the end of the tread belt support arm.

7. The tire handling and tread belt manipulator mechanism of claim 5 or 6 further comprising at least two protruding rods or blocks (535) spaced on each support arm (533).

8. The tire handling and tread belt manipulator mechanism of at least of claims 5 through 7 wherein each tread belt support arm (533) has one or more telescoping slidable extension sections.

## Patentansprüche

1. Verfahren zur Bildung einer zweiteiligen Reifenbaugruppe durch Montieren eines großen Profilgürtels (12, 512b) auf eine Reifenkarkasse (14, 514), wenn die Reifenkarkasse (14, 514) auf einer Felge (42) an einem Fahrzeug (600) montiert ist, wobei das Verfahren die Schritte umfasst des :
Hochwindens der Fahrzeugradposition ;
Ziehens eines Vakuums das teilweise die Karkasse (14, 514) zusammenfallen lässt;
Einsetzens eines Paars Stützarme (533a, 533b) zwischen Lauffläche und Luft abgelassener Karkasse (14, 514), um an der radial inneren Fläche des großen Profilgürtels (12, 512b) anzugreifen ;
Platzierens eines vertikalen oberen, radial inneren Teils des Profilgürtels (12, 512b) auf eine Oberseite der Karkasse (14, 514) etwa auf halbem Weg oder mehr über die axiale Breite der Karkasse (14, 514), wodurch das Profilgürtelgewicht gestützt wird ;
Anhebens oder Drückens des Rests des Profilgürtels (12, 512b) axial um einen vorbestimmten Abstand über die Karkasse (14, 514) ;
Befüllens der Karkasse (14, 514) auf einen vorbestimmten Druck, um die zweiteilige Reifenbaugruppe zu bilden, während sie an dem Fahrzeug (600) montiert ist.

2. Verfahren nach Anspruch 1, wobei die radiale Innenfläche des Profilgürtels (12, 512b) und die radiale Außenfläche der Karkasse (14, 514) ineinandergreifende, in Umfangsrichtung durchlaufende Rippen und Rillen aufweisen und das Verfahren weiter die Schritte des zueinander Ausrichtens der Rillen und Rippen vor dem Befüllen der Karkasse (14, 514) umfasst.

3. Verfahren nach Anspruch 1 oder 2, weiter die Schritte umfassend des :
Haltens oder Zurückhaltens des Profilgürtels (12, 512b) unter Verwendung des Paars Stützarme (533a, 533b), die nicht über die volle Breite des Gürtels eingebracht sind ; und
Bewegens des Profilgürtels (12, 512b) seitlich über die Karkasse (14, 514) an den Stützarmen (533a, 533b) vorbei.

4. Verfahren nach mindestens einem der vorhergehenden Ansprüche, wobei der Schritt des Festhaltens den Schritt des Kippens des Profilgürtels (12, 512b) auf den Stützarmen (533a, 533b) umfasst, wodurch das Gewicht des Profilgürtels den unteren Teil mindestens teilweise über die Karkasse bewegt.

5. Reifenhandhabungs- und Profilgürtelmanipulatormechanismus, umfassend ein Paar bewegbarer Manipulatorarme (531) ; ein an den Enden der Manipulatorarme (531) befestigtes Paar Reifengreifer (532) ; ein Paar Profilgürtelstützarme (533), wobei einer über den Reifengreifern (532) an jedem Manipulatorarm (531) befestigt ist ; und ein Hydraulikmittel zum Bewegen der Manipulatorarme (531).

6. Reifenhandhabungs- und Profilgürtelmanipulatormechanismus nach Anspruch 5, weiter ein Paar Profilgürtel-Endblöcke umfassend, wobei ein Endblock an dem Ende des Profilgürtelstützarms befestigt ist.

7. Reifenhandhabungs- und Profilgürtelmanipulatormechanismus nach Anspruch 5 oder 6, weiter mindestens zwei vorragende Stäbe oder Blöcke (535) umfassend, die an jedem Stützarm (533) beabstandet sind.

8. Reifenhandhabungs- und Profilgürtelmanipulatormechanismus nach mindestens einem der Ansprüche 5 bis einschließlich 7, wobei jeder Profilgürtelstützarm (533) ein oder mehrere teleskopartig verschiebbare Verlängerungsabschnitte aufweist.

## Revendications

1. Procédé de formation d'un assemblage de bandage pneumatique en deux-pièces en montant une ceinture de bande de roulement de grande dimension (12, 512) sur une carcasse de bandage pneumatique (14, 514) lorsque la carcasse du bandage pneumatique (14, 514) est montée sur une jante (42) sur un véhicule (600), le procédé comprenant les étapes consistant à :
monter la roue du véhicule sur un vérin ;
appliquer un vide affaissant en partie la carcasse (14, 514) ;
insérer une paire de bras de support (533a, 533b) entre la bande de roulement et la carcasse à l'état dégonflé (14, 514) pour entrer en contact avec la surface interne en direction radiale de la ceinture de bande de roulement de grande dimension ;
placer une portion supérieure verticale interne en direction radiale de la ceinture de bande de roulement (12, 512b) sur la surface supérieure de la carcasse (14, 514) environ sur la moitié de la distance ou plus de la largeur axiale la carcasse (14, 514) pour ainsi supporter le poids de la ceinture de bande de roulement ;
soulever ou pousser le reste de la ceinture de bande de roulement (12, 512b) en direction axiale par-dessus la carcasse (14, 514) sur une distance prédéterminée ;
gonfler la carcasse (14, 514) jusqu'à une pression prédéterminée pour obtenir l'assemblage de bandage pneumatique en deux-pièces à l'état monté sur le véhicule (600).

2. Procédé selon la revendication 1, dans lequel la surface interne en direction radiale de la ceinture de bande de roulement (12, 512b) et la surface externe radiale de la carcasse (14, 514) possèdent des nervures et des rainures continues en direction circonférentielle s'interpénétrant les unes les autres, le procédé comprenant en outre les étapes consistant à mettre les rainures et les nervures en alignement réciproque avant de gonfler la carcasse (14, 514).

3. Procédé selon la revendication 1 ou 2, comprenant en outre les étapes consistant à :
maintenir ou restreindre la ceinture de bande de roulement (12, 512b) en utilisant la paire de bras de support (533a, 533b) non insérée sur la largeur totale de la ceinture ; et
déplacer la ceinture de bande de roulement (12, 512b) en direction latérale par-dessus la carcasse (14, 514) au-delà des bras de support (533a, 533b).

4. Procédé selon au moins une des revendications précédentes, dans lequel l'étape de maintien englobe l'étape consistant à faire basculer la ceinture de bande de roulement (12, 512b) sur les bras de support (533a, 533b), si bien que le poids de la ceinture de bande de roulement se déplace sur la portion inférieure au moins en partie par-dessus la carcasse.

5. Mécanisme de manipulation de bandage pneumatique et de manipulation de ceinture de bande de roulement comprenant : une paire de bras de manipulation mobiles (531) ; une paire de dispositifs de préhension (532) fixés aux extrémités des bras de manipulation (531) ; une paire de bras de support de ceintures de bande de roulement (533), dont un est fixé au-dessus des dispositifs de préhension de bandage pneumatique (532) sur chaque bras de manipulation (531) ; et un moyen hydraulique pour déplacer les bras de manipulation (531).

6. Mécanisme de manipulation de bandage pneumatique et de manipulation de ceinture de bande de roulement selon la revendication 5, comprenant en outre une paire de blocs terminaux de ceintures de bande de roulement, un bloc terminal étant fixé à l'extrémité du bras de support de ceintures de bande de roulement.

7. Mécanisme de manipulation de bandage pneumatique et de manipulation de ceinture de bande de roulement selon la revendication 5 ou 6, comprenant en outre au moins deux tiges ou deux blocs saillants (535) espacés sur chaque bras de support (533).

8. Mécanisme de manipulation de bandage pneumatique et de manipulation de ceinture de bande de roulement selon au moins une des revendications 5 à 7, dans lequel chaque bras de support de ceintures de bande de roulement (533) possède un ou plusieurs tronçons d'extension aptes à coulisser à la manière d'un télescope.
